(19) Europäisches Patentamt
European Patent Office
Office européen des brevets

(11) EP 4 339 154 A1

(12) EUROPEAN PATENT APPLICATION

(43) Date of publication:
**20.03.2024 Bulletin 2024/12**

(21) Application number: **22195516.4**

(22) Date of filing: **14.09.2022**

(51) International Patent Classification (IPC):
***C01B 3/38*** *(2006.01)* ***C01B 3/48*** *(2006.01)*

(52) Cooperative Patent Classification (CPC):
**C01B 3/384; C01B 3/48;** C01B 2203/0415; C01B 2203/043; C01B 2203/0475; C01B 2203/0827; C01B 2203/0883; C01B 2203/146

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **L'AIR LIQUIDE, SOCIETE ANONYME POUR L'ETUDE ET L'EXPLOITATION DES PROCEDES GEORGES CLAUDE**
**75007 Paris (FR)**

(72) Inventors:
- **Rossi, Umberto**
  **60439 Frankfurt am Main (DE)**
- **Ulber, Dieter**
  **60439 Frankfurt am Main (DE)**
- **Huebel, Mirko**
  **60439 Frankfurt am Main (DE)**
- **Kuzniar, Jakub**
  **31-545 Krakow (PL)**
- **Kaiser, Tobias**
  **60439 Frankfurt am Main (DE)**
- **Roesch, Alexander**
  **60439 Frankfurt am Main (DE)**
- **Junger, Jasmin**
  **60439 Frankfurt am Main (DE)**

(74) Representative: **Dropsch, Holger**
**Air Liquide Forschung und Entwicklung GmbH**
**Gwinnerstraße 27-33**
**60388 Frankfurt am Main (DE)**

# (54) PROCESS AND PLANT FOR PRODUCING HYDROGEN BY STEAM REFORMING OF A HYDROCARBON-CONTAINING FEED GAS

(57) Provided is a process for producing hydrogen by (a) producing a crude synthesis gas stream in reformer tubes being arranged in a reformer furnace (104, 204), the interior of which is heated by at least one burner (106, 206) comprising a first fuel gas supply (108, 208) and a second fuel gas supply (110, 210); (b) cooling the crude synthesis gas stream; (c) producing a hydrogen product stream and a PSA offgas stream from the cooled synthesis gas stream; (d) splitting the PSA offgas stream into a first and second partial PSA offgas stream; (e) separating carbon dioxide from the first partial PSA offgas stream; and (f) introducing a first carbon dioxide depleted partial PSA offgas stream as first fuel gas stream into the first fuel gas supply (108, 208), and the second partial PSA offgas stream as second fuel gas stream into the second fuel gas supply (110, 210).

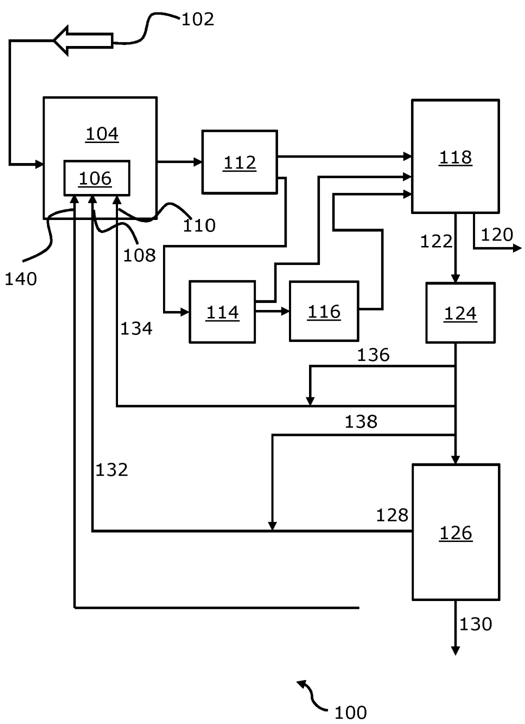


FIG. 1

EP 4 339 154 A1

## Description

### TECHNICAL FIELD

The present disclosure relates generally to reforming process; more specifically, the present disclosure relates to a process and a plant for continuous production of hydrogen by steam reforming of a hydrocarbon-containing feed gas irrespective of an operation mode of a carbon dioxide capture device. The present disclosure also relates to a method for revamping of a hydrogen production plant.

### BACKGROUND

Nowadays hydrogen is seen by many as the most promising future energy vector that would enable reducing amount of carbon dioxide emitted in the atmosphere. However, the large-scale production of hydrogen is still connected to substantial emissions of carbon dioxide. As a result, solutions to produce low-carbon hydrogen are being developed and deployed in the industry, among which capturing the carbon dioxide from a process is one of the most debated.

Existing operation of a hydrogen plant with a pre-combustion carbon dioxide capture unit i.e., an amine wash unit upstream of a pressure swing adsorption (PSA) unit, can be challenging with regards to a need to assure continuous production of hydrogen even when the carbon dioxide capture unit is not in operation (e.g., due to a trip). One of the main issues connected to that is handling of PSA tail gas in two scenarios such as with and without the carbon dioxide capture unit. For example, when the carbon dioxide capture unit is in operation, the PSA tail gas will have a smaller flow rate, will be substantially without carbon dioxide and will have a high lower heating value (LHV). Otherwise, when the carbon dioxide capture unit is not in operation, the PSA tail gas will have a higher flow rate, have a high carbon dioxide content and will have a smaller LHV due to inert content. Burning above two very different streams (PSA tail gas) with a same burner (i.e., in steam methane reforming (SMR) fuel side) is an issue due to different fuel properties (Wobbe number), and significant increase in nitrogen oxides (NOx) emissions which also affects plant reliability.

Therefore, there is a need to address aforementioned technical drawbacks in existing known technologies in hydrogen production.

### SUMMARY

The present disclosure seeks to provide an improved approach for continuously producing low-carbon hydrogen, where burning of different streams of pressure swing adsorption (PSA) tail gas, as a result of different operation modes of carbon dioxide capture device, is an issue due to different fuel properties, and significant increase in nitrogen oxides (NOx) emissions which also affects plant reliability. An aim of the present disclosure is to provide a solution that overcomes, at least partially, the problems encountered in prior art and provide a process and a plant for continuously producing hydrogen irrespective of the operation modes of the carbon dioxide capture device such as in full-load operation, partial-load operation and with the carbon dioxide capture device being shut down. The process and the plant use a burner system that comprises at least two fuel gas supplies on a same burner, namely a first fuel gas supply and a second fuel gas supply to cover a high fuel range while minimizing nitrogen oxides (NOx) emissions and ensuring continuous production of hydrogen. The object of the present disclosure is achieved by the solutions provided in the enclosed independent claims. Advantageous implementations of the present disclosure are further defined in the enclosed dependent claims.

According to a first aspect, the present disclosure provides a process for producing hydrogen by steam reforming of a hydrocarbon-containing feed gas, comprising the following steps:

(a) providing a feed gas stream containing gaseous or vaporized hydrocarbons, preferably natural gas or naphtha;

(b) introducing the feed gas stream into a reforming stage, reacting the feed gas stream in the reforming stage under steam reforming conditions in a plurality of reformer tubes filled with a solid particulate reforming catalyst to produce a crude synthesis gas stream containing hydrogen, carbon monoxide, carbon dioxide, and unreacted hydrocarbons, said reformer tubes being arranged in a reformer furnace, the interior of which is heated by means of at least one burner, preferably by a plurality of burners, by combusting at least two fuel gases with oxygen and/or air, said at least one burner or plurality of burners comprising a first fuel gas supply and a second fuel gas supply on the same burner, wherein a first fuel gas is introduced into the first fuel gas supply and a second fuel gas is introduced into the second fuel gas supply; wherein the flow rates of the first fuel gas stream and the second fuel gas stream are adjustable;

(c) discharging the crude synthesis gas stream from the reforming stage and introducing the crude synthesis gas stream into a first cooling device, cooling the crude synthesis gas stream in the first cooling device in indirect heat exchange with at least one coolant stream, discharging a cooled crude synthesis gas stream from the first cooling

device;
(d) optionally, introducing at least a part of the cooled crude synthesis gas stream into a CO shift plant comprising at least one CO shift stage, converting the cooled crude synthesis gas stream introduced into the CO shift plant under CO shift conditions to a shifted synthesis gas stream, discharging the shifted synthesis gas stream enriched in hydrogen and carbon dioxide and depleted in carbon monoxide relative to the crude synthesis gas stream;
(e) optionally, introducing the shifted synthesis gas stream into a second cooling device, cooling the shifted synthesis gas stream in the second cooling device in indirect heat exchange with a second coolant stream, discharging a cooled shifted synthesis gas stream from the second cooling device;
(f) introducing the cooled crude synthesis gas stream from step (c) or the cooled shifted synthesis gas stream from optional steps (d) and (e) into a hydrogen enrichment device, operating on the principle of pressure swing adsorption (PSA), discharging a hydrogen product stream and a PSA offgas stream from the hydrogen enrichment device, wherein the PSA offgas stream comprises hydrogen, carbon monoxide, carbon dioxide, and unreacted hydrocarbons;
(g) splitting the PSA offgas stream into a first partial PSA offgas stream and a second partial PSA offgas stream, wherein the first partial PSA offgas stream and the second partial PSA offgas stream both range between and including 0 to 100 mol-% of the PSA offgas stream, and the sum of the first partial PSA offgas stream and the second partial PSA offgas stream equals the PSA offgas stream;
(h) introducing the first partial PSA offgas stream into a carbon dioxide capture device, separating carbon dioxide from the first partial PSA offgas stream under carbon dioxide separation conditions, discharging a first carbon dioxide depleted partial PSA offgas stream and a carbon dioxide enriched offgas stream from the carbon dioxide capture device; and
(i) introducing at least a portion of the first carbon dioxide depleted partial PSA offgas stream as the first fuel gas stream into the first fuel gas supply of the at least one burner or the plurality of burners in the reformer furnace, and introducing at least a portion of the second partial PSA offgas stream as the second fuel gas stream into the second fuel gas supply of the at least one burner or the plurality of burners in the reformer furnace.

According to a second aspect, the present disclosure provides a process for producing hydrogen by steam reforming of a hydrocarbon-containing feed gas, comprising the following steps:

(a) providing a feed gas stream containing gaseous or vaporized hydrocarbons, preferably natural gas or naphtha;
(b) introducing the feed gas stream into a reforming stage, reacting the feed gas stream in the reforming stage under steam reforming conditions in a plurality of reformer tubes filled with a solid particulate reforming catalyst to produce a crude synthesis gas stream containing hydrogen, carbon monoxide, carbon dioxide, and unreacted hydrocarbons, said reformer tubes being arranged in a reformer furnace, the interior of which is heated by means of at least one burner, preferably by a plurality of burners, by combusting at least two fuel gases with oxygen and/or air, said at least one burner or plurality of burners comprising a first fuel gas supply and a second fuel gas supply on the same burner, wherein a first fuel gas is introduced into the first fuel gas supply and a second fuel gas is introduced into the second fuel gas supply; wherein the flow rates of the first fuel gas stream and the second fuel gas stream are adjustable;
(c) discharging the crude synthesis gas stream from the reforming stage and introducing the crude synthesis gas stream into a first cooling device, cooling the crude synthesis gas stream in the first cooling device in indirect heat exchange with at least one coolant stream, discharging a cooled crude synthesis gas stream from the first cooling device;
(d) optionally, introducing at least a part of the cooled crude synthesis gas stream into a CO shift plant comprising at least one CO shift stage, converting the cooled crude synthesis gas stream introduced into the CO shift plant under CO shift conditions to a shifted synthesis gas stream, discharging the shifted synthesis gas stream enriched in hydrogen and carbon dioxide and depleted in carbon monoxide relative to the crude synthesis gas stream;
(e) optionally, introducing the shifted synthesis gas stream into a second cooling device, cooling the shifted synthesis gas stream in the second cooling device in indirect heat exchange with a second coolant stream, discharging a cooled shifted synthesis gas stream from the second cooling device;
(f) introducing the cooled crude synthesis gas stream from step (c) or the cooled shifted synthesis gas stream from optional steps (d) and (e) into a carbon dioxide capture device, separating carbon dioxide from the cooled crude synthesis gas stream or from the cooled shifted synthesis gas stream under carbon dioxide separation conditions, discharging a carbon dioxide depleted synthesis gas stream and a carbon dioxide enriched offgas stream from the carbon dioxide capture device;
(g) introducing the carbon dioxide depleted synthesis gas stream into a hydrogen enrichment device, operating on the principle of pressure swing adsorption (PSA), discharging a hydrogen product stream and a PSA offgas stream from the hydrogen enrichment device, wherein the PSA offgas stream comprises hydrogen, carbon monoxide, carbon dioxide, and unreacted hydrocarbons;

(h) splitting the PSA offgas stream into a first partial PSA offgas stream and a second partial PSA offgas stream, wherein the first partial PSA offgas stream and the second partial PSA offgas stream both range between and including 0 to 100 mol-% of the PSA offgas stream, and the sum of the first partial PSA offgas stream and the second partial PSA offgas stream equals the PSA offgas stream; and

(i) introducing at least a portion of the first partial PSA offgas stream as the first fuel gas stream into the first fuel gas supply of the at least one burner or the plurality of burners in the reformer furnace, and introducing at least a portion of the second partial PSA offgas stream as the second fuel gas stream into the second fuel gas supply of the at least one burner or the plurality of burners in the reformer furnace.

The process for producing the hydrogen according to the present disclosure is of advantage in that the process ensures continuous production of low-carbon hydrogen even when the carbon dioxide capture device is not in operation. The process uses at least two fuel gas supplies on the same burner, namely the first fuel gas supply and the second fuel gas supply, to accommodate different streams of PSA tail gas or PSA offgas while minimizing NOx emissions and ensuring continuous production of hydrogen. When the process is carried out, switching between the first fuel gas supply and the second fuel gas supply is performed in an automatic way without impacting the production of hydrogen. Further, the process increases the overall reliability of a hydrogen production plant and increases a lifetime of the burner system.

According to a third aspect, the present disclosure provides a plant for producing hydrogen by steam reforming of a hydrocarbon-containing feed gas, comprising the following assemblies and components in fluid communication with each other:

(a) means for providing a feed gas stream containing gaseous or vaporized hydrocarbons, preferably natural gas or naphtha;

(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;

(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;

(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device;

(f) a hydrogen enrichment device, operating on the principle of pressure swing adsorption (PSA), means for introducing the cooled crude synthesis gas stream from step (c) or the cooled shifted synthesis gas stream from optional steps (d) and (e) into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;

(g) means for splitting the PSA offgas stream into a first partial PSA offgas stream and a second partial PSA offgas stream, means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream;

(h) a carbon dioxide capture device, designed to allow separating carbon dioxide from the first partial PSA offgas stream under carbon dioxide separation conditions, means for introducing the first partial PSA offgas stream into the carbon dioxide capture device, means for discharging a first carbon dioxide depleted partial PSA offgas stream and a carbon dioxide enriched offgas stream from the carbon dioxide capture device; and

(i) means for introducing at least a portion of the first carbon dioxide depleted partial PSA offgas stream as the first fuel gas stream into the first fuel gas supply of the at least one burner or the plurality of burners in the reformer furnace, and means for introducing at least a portion of the second partial PSA offgas stream as the second fuel gas stream into the second fuel gas supply of the at least one burner or the plurality of burners in the reformer furnace.

According to a fourth aspect, the present disclosure provides a plant for producing hydrogen by steam reforming of a hydrocarbon-containing feed gas, comprising the following assemblies and components in fluid communication with each other:

(a) means for providing a feed gas stream containing gaseous or vaporized hydrocarbons, preferably natural gas or naphtha;
(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;
(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;
(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device;
(f) a carbon dioxide capture device, designed to allow separating carbon dioxide from the cooled shifted synthesis gas stream under carbon dioxide separation conditions, means for introducing the cooled crude synthesis gas stream from step (c) or the cooled shifted synthesis gas stream from optional steps (d) and (e) into the carbon dioxide capture device, means for discharging a carbon dioxide depleted synthesis gas stream and a carbon dioxide offgas stream from the carbon dioxide capture device;
(g) a hydrogen enrichment device, operating on the principle of pressure swing adsorption (PSA), means for introducing the carbon dioxide depleted synthesis gas stream into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;
(h) means for splitting the PSA offgas stream into a first partial PSA offgas stream and a second partial PSA offgas stream, means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream; and
(i) means for introducing at least a portion of the first partial PSA offgas stream as the first fuel gas stream into the first fuel gas supply of the at least one burner or the plurality of burners in the reformer furnace, and means for introducing at least a portion of the second partial PSA offgas stream as the second fuel gas stream into the second fuel gas supply of the at least one burner or the plurality of burners in the reformer furnace.

The plant for producing the hydrogen according to the present disclosure is of advantage in that the plant ensures continuous production of low-carbon hydrogen even when the carbon dioxide capture device is not in operation. The plant uses at least two fuel gas supplies on the same burner, namely the first fuel gas supply and the second fuel gas supply, to accommodate different streams of PSA tail gas or PSA offgas which are due to different operation modes of the carbon dioxide capture device such as in full-load operation, partial-load operation and with the carbon dioxide capture device being shut down. Accordingly, the plant ensures continuous production of hydrogen, minimizes NOx

emissions and increases a lifetime of the burner system. When the plant is in operation, switching between the first fuel gas supply and the second fuel gas supply is performed in an automatic way without impacting the production of hydrogen.

According to a fifth aspect, the present disclosure provides a method for revamping of a hydrogen production plant, wherein the hydrogen production plant comprises the following assemblies and components in fluid communication with each other:

(a) means for providing a feed gas stream containing gaseous or vaporized hydrocarbons, preferably natural gas or naphtha;

(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;

(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;

(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device; and

(f) a hydrogen enrichment device, operating on the principle of pressure swing adsorption (PSA), means for introducing the cooled crude synthesis gas stream from step (c) or the cooled shifted synthesis gas stream from optional steps (d) and (e) into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;

said method for revamping comprising the steps of:

(g) installing means for splitting the PSA offgas stream into a first partial PSA offgas stream and a second partial PSA offgas stream, installing means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream;

(h) installing a carbon dioxide capture device, designed to allow separating carbon dioxide from the first partial PSA offgas stream under carbon dioxide separation conditions, installing means for introducing the first partial PSA offgas stream into the carbon dioxide capture device, installing means for discharging a first carbon dioxide depleted partial PSA offgas stream and a carbon dioxide enriched offgas stream from the carbon dioxide capture device; and

(i) installing means for introducing at least a portion of the first carbon dioxide depleted partial PSA offgas stream as the first fuel gas stream into the first fuel gas supply of the at least one burner or the plurality of burners in the reformer furnace, and installing means for introducing at least a portion of the second partial PSA offgas stream as the second fuel gas stream into the second fuel gas supply of the at least one burner or the plurality of burners in the reformer furnace.

According to a sixth aspect, the present disclosure provides a method for revamping of a hydrogen production plant, wherein the hydrogen production plant comprises the following assemblies and components in fluid communication with each other:

(a) means for providing a feed gas stream containing gaseous or vaporized hydrocarbons, preferably natural gas

or naphtha;

(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;

(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;

(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device; and

(f) a hydrogen enrichment device, operating on the principle of pressure swing adsorption (PSA), means for introducing the carbon dioxide depleted synthesis gas stream into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;

said method for revamping comprising the steps of:

(g) installing a carbon dioxide capture device, designed to allow separating carbon dioxide from the cooled shifted synthesis gas stream under carbon dioxide separation conditions, installing means for introducing the cooled crude synthesis gas stream from step (c) or the cooled shifted synthesis gas stream from optional steps (d) and (e) into the carbon dioxide capture device, installing means for discharging a carbon dioxide depleted synthesis gas stream and a carbon dioxide offgas stream from the carbon dioxide capture device;

(h) installing means for splitting the PSA offgas stream into a first partial PSA offgas stream and a second partial PSA offgas stream, installing means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream; and

(i) installing means for introducing at least a portion of the first partial PSA offgas stream as the first fuel gas stream into the first fuel gas supply of the at least one burner or the plurality of burners in the reformer furnace, and installing means for introducing at least a portion of the second partial PSA offgas stream as the second fuel gas stream into the second fuel gas supply of the at least one burner or the plurality of burners in the reformer furnace.

The method for revamping of the hydrogen production plant according to the present disclosure is of advantage in that the method enables to convert an existing hydrogen production plant in order to produce low-carbon hydrogen continuously even when the carbon dioxide capture device is not in operation.

Embodiments of the present disclosure eliminate the aforementioned drawbacks in existing known approaches using the burner system with at least two fuel gas supply to accommodate different streams of PSA offgas, thereby enabling continuous production of low-carbon hydrogen even when the carbon dioxide capture device is not in operation and also minimizing NOx emissions.

Additional aspects, advantages, features and objects of the present disclosure are made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

## BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, the same elements have been indicated by identical numbers. Embodiments of the present disclosure will now be described, by way of example only, with reference to the following diagrams wherein:

FIG. 1 is a block diagram of a plant for producing hydrogen by steam reforming of a hydrocarbon-containing feed gas where a carbon dioxide capture device is downstream to a hydrogen enrichment device according to an embodiment of the present disclosure;

FIG. 2 is a block diagram of a plant for producing hydrogen by steam reforming of a hydrocarbon-containing feed gas where a carbon dioxide capture device is upstream to a hydrogen enrichment device according to an embodiment of the present disclosure.

## DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

As used herein, several terms are defined below:

$$\text{Wobbe Index (IW)} = \text{HHV} / \sqrt{(\text{SG})},$$

where:

HHV is the higher heating value.
SG is the specific gravity of the gas defined at standard conditions STD (0 °C and 1 atm).

Further, SG can be expressed as:

$$\text{SG} = \text{density of the gas (at STD conditions) / density of air (at STD conditions) = molar mass of the gas / molar mass of air.}$$

$\sqrt{(SG)}$ is the square root of the specific gravity of the gas.

The term "feed gas stream" is to be understood as meaning a feedstock or a raw material used to produce a synthesis gas product.

Steam reforming is a most common process used to produce the synthesis gas product. The reaction is represented by this equilibrium:

$$CH_4 + H_2O \rightleftharpoons CO + 3H_2$$

Steam reforming conditions and carbon monoxide (CO) shift conversion conditions are known to those skilled in the art from the prior art. These are the physicochemical conditions under which a measurable, preferably industrially relevant, conversion of hydrocarbons to synthesis gas products is achieved. For example, in the context of steam reforming, important parameters include adjustment of a suitable steam reforming entry temperature of typically about 1000°C and addition of steam to the input gas containing hydrocarbons and thus adjustment of a steam/carbon ratio (S/C ratio). Typical values for the S/C ratio are between 1.5 and 3.5 mol/mol. Typical steam reforming inlet temperatures are up to 700 °C and typically range between 550 °C and 650 °C. Necessary adjustments of these conditions to the respective operational requirements will be made by those skilled in the art on the basis of routine experiments. Any specific reaction conditions disclosed may serve here as a guide, but they should not be regarded as limiting in relation to the scope of the invention.

Pressures, if any, are reported in absolute pressure units, bara for short, or in gauge pressure units, barg for

short, unless otherwise stated in the particular individual context.

A fluid connection between two regions of the apparatus or plant according to the invention is to be understood as meaning any type of connection whatsoever which makes it possible for a fluid, for example a gas stream, to flow from one to the other of the two regions, neglecting any interposed regions or components. In particular a direct fluid connection is to be understood as meaning any type of connection whatsoever which makes it possible for a fluid, for example a gas stream, to flow directly from one to the other of the two regions, wherein no further regions or components are interposed with the exception of purely transportational operations and the means required therefor, for example pipelines, valves, pumps, compressors, reservoirs. One example would be a pipeline leading directly from one to the other of the two regions.

A means is to be understood as meaning something that enables or is helpful in the achievement of a goal. In particular, means for performing a particular process step are to be understood as meaning any physical articles that would be considered by a person skilled in the art in order to be able to perform this process step. For example, a person skilled in the art will consider means of introducing or discharging a material stream to include any transporting and conveying apparatuses, i.e., for example pipelines, pumps, compressors, valves, which seem necessary or sensible to said skilled person for performance of this process step on the basis of his knowledge of the art.

For the purposes of this description steam is to be understood as being synonymous with water vapor unless the opposite is indicated in an individual case. By contrast, the term "water" refers to water in the liquid state of matter unless otherwise stated in an individual case.

In the context of the present disclosure, carbon dioxide separation conditions refer to the specific conditions of a selected physical or chemical carbon dioxide separation process which are known to a skilled person. A physical or chemical carbon dioxide separation process is understood to be a process that enables a fluid mixture, for example a gas mixture, to be separated into its components or undesirable components to be separated from this mixture by applying suitable physicochemical conditions, for example by phase transition such as condensation or by using a suitable sorbent. When a sorption process is used, it may be based on adsorption, i.e., binding of the substance or substances to be separated to a surface or interface of the solid adsorbent, or on absorption, i.e., uptake of the substance or substances to be separated into the volume of the liquid or solid adsorbent. The substance or substances separated and bound by means of sorption are referred to as adsorbate or absorbate. The binding forces acting in this process can be of a physical or chemical nature. Accordingly, weaker, non-specific binding forces, e.g., van der Waals forces, usually act in physical sorption, whereas stronger, more specific binding forces act in chemical sorption and the adsorbate and/or absorbent is chemically changed.

As synonyms for the term absorbent, the terms solvent or washing agent in the case of liquid absorbents are used in the context of the present disclosure.

A specific, physical absorption process is the gas scrubbing with cryogenic methanol, which uses methanol as absorbent or scrubbing agent, the temperature of which has been cooled by means of cold-generating processes below ambient temperature, preferably below 0 °C, most preferably below - 30 °C. This process is known to the skilled person as the Rectisol process.

In contrast, the amine washes, which are known per se and frequently used for the absorption of carbon dioxide, are based on chemical absorption (chemisorption) and achieve high purities even at relatively low pressures in the absorption column. The selectivity is also usually higher than with physical absorption processes.

In amine washing, slightly alkaline aqueous solutions of amines, often ethanolamine derivatives, are used in an absorption unit (absorption section) usually designed as a washing column. Absorption takes place at low temperature, e.g., 40 °C, and slightly elevated pressure, e.g., 8 bara. Fresh or regenerated absorbent is fed at the top of the column and the gas stream to be separated is introduced in the lower section of the scrubbing column. In this process, carbon dioxide is reversibly chemically absorbed. The gas, which is depleted in carbon dioxide, leaves the column at the top and the loaded scrubbing agent is discharged at the bottom of the column and fed into a desorption section, which is also frequently designed as a separation column. In the desorption column (regeneration section), the reaction reverses the chemical equilibrium at a higher temperature and lower pressure, thus releasing the absorbed carbon dioxide as a gas. It can then be discharged at the head of the desorption column for further use or disposal. The absorbent regenerated in this way is returned to the absorption section.

An absorbent commonly used in amine scrubbing is methyldiethanolamine (MDEA), which is mostly used in aqueous solutions. In addition, activators, for example piperazine, are often added to accelerate carbon dioxide absorption, as described, for example, in the article "The Activator Mechanism of Piperazine in Aqueous Methyldiethanolamine Solutions," J. Ying et al, Energy Procedia 114 (2017), pp. 2078 - 2087. These mixtures are then referred to as activated MDEA solutions (aMDEA).

Optional or optionally means that the subsequently described event or circumstances may or may not occur. The description includes instances where the event or circumstance occurs and instances where it does not occur.

"Providing" in a claim is defined to mean furnishing, supplying, making available, or preparing something. The step may be performed by any actor in the absence of express language in the claim to the contrary.

According to a first aspect, the present disclosure provides a process for producing hydrogen by steam reforming of a hydrocarbon-containing feed gas, comprising the following steps:

(a) providing a feed gas stream containing gaseous or vaporized hydrocarbons, preferably natural gas or naphtha;
(b) introducing the feed gas stream into a reforming stage, reacting the feed gas stream in the reforming stage under steam reforming conditions in a plurality of reformer tubes filled with a solid particulate reforming catalyst to produce a crude synthesis gas stream containing hydrogen, carbon monoxide, carbon dioxide, and unreacted hydrocarbons, said reformer tubes being arranged in a reformer furnace, the interior of which is heated by means of at least one burner, preferably by a plurality of burners, by combusting at least two fuel gases with oxygen and/or air, said at least one burner or plurality of burners comprising a first fuel gas supply and a second fuel gas supply on the same burner, wherein a first fuel gas is introduced into the first fuel gas supply and a second fuel gas is introduced into the second fuel gas supply; wherein the flow rates of the first fuel gas stream and the second fuel gas stream are adjustable;
(c) discharging the crude synthesis gas stream from the reforming stage and introducing the crude synthesis gas stream into a first cooling device, cooling the crude synthesis gas stream in the first cooling device in indirect heat exchange with at least one coolant stream, discharging a cooled crude synthesis gas stream from the first cooling device;
(d) optionally, introducing at least a part of the cooled crude synthesis gas stream into a CO shift plant comprising at least one CO shift stage, converting the cooled crude synthesis gas stream introduced into the CO shift plant under CO shift conditions to a shifted synthesis gas stream, discharging the shifted synthesis gas stream enriched in hydrogen and carbon dioxide and depleted in carbon monoxide relative to the crude synthesis gas stream;
(e) optionally, introducing the shifted synthesis gas stream into a second cooling device, cooling the shifted synthesis gas stream in the second cooling device in indirect heat exchange with a second coolant stream, discharging a cooled shifted synthesis gas stream from the second cooling device;
(f) introducing the cooled crude synthesis gas stream from step (c) or the cooled shifted synthesis gas stream from optional steps (d) and (e) into a hydrogen enrichment device, operating on the principle of pressure swing adsorption (PSA), discharging a hydrogen product stream and a PSA offgas stream from the hydrogen enrichment device, wherein the PSA offgas stream comprises hydrogen, carbon monoxide, carbon dioxide, and unreacted hydrocarbons;
(g) splitting the PSA offgas stream into a first partial PSA offgas stream and a second partial PSA offgas stream, wherein the first partial PSA offgas stream and the second partial PSA offgas stream both range between and including 0 to 100 mol-% of the PSA offgas stream, and the sum of the first partial PSA offgas stream and the second partial PSA offgas stream equals the PSA offgas stream;
(h) introducing the first partial PSA offgas stream into a carbon dioxide capture device, separating carbon dioxide from the first partial PSA offgas stream under carbon dioxide separation conditions, discharging a first carbon dioxide depleted partial PSA offgas stream and a carbon dioxide enriched offgas stream from the carbon dioxide capture device; and
(i) introducing at least a portion of the first carbon dioxide depleted partial PSA offgas stream as the first fuel gas stream into the first fuel gas supply of the at least one burner or the plurality of burners in the reformer furnace, and introducing at least a portion of the second partial PSA offgas stream as the second fuel gas stream into the second fuel gas supply of the at least one burner or the plurality of burners in the reformer furnace.

According to a second aspect, the present disclosure provides a process for producing hydrogen by steam reforming of a hydrocarbon-containing feed gas, comprising the following steps:

(a) providing a feed gas stream containing gaseous or vaporized hydrocarbons, preferably natural gas or naphtha;
(b) introducing the feed gas stream into a reforming stage, reacting the feed gas stream in the reforming stage under steam reforming conditions in a plurality of reformer tubes filled with a solid particulate reforming catalyst to produce a crude synthesis gas stream containing hydrogen, carbon monoxide, carbon dioxide, and unreacted hydrocarbons, said reformer tubes being arranged in a reformer furnace, the interior of which is heated by means of at least one burner, preferably by a plurality of burners, by combusting at least two fuel gases with oxygen and/or air, said at least one burner or plurality of burners comprising a first fuel gas supply and a second fuel gas supply on the same burner, wherein a first fuel gas is introduced into the first fuel gas supply and a second fuel gas is introduced into the second fuel gas supply; wherein the flow rates of the first fuel gas stream and the second fuel gas stream are adjustable;
(c) discharging the crude synthesis gas stream from the reforming stage and introducing the crude synthesis gas stream into a first cooling device, cooling the crude synthesis gas stream in the first cooling device in indirect heat exchange with at least one coolant stream, discharging a cooled crude synthesis gas stream from the first cooling device;

(d) optionally, introducing at least a part of the cooled crude synthesis gas stream into a CO shift plant comprising at least one CO shift stage, converting the cooled crude synthesis gas stream introduced into the CO shift plant under CO shift conditions to a shifted synthesis gas stream, discharging the shifted synthesis gas stream enriched in hydrogen and carbon dioxide and depleted in carbon monoxide relative to the crude synthesis gas stream;
(e) optionally, introducing the shifted synthesis gas stream into a second cooling device, cooling the shifted synthesis gas stream in the second cooling device in indirect heat exchange with a second coolant stream, discharging a cooled shifted synthesis gas stream from the second cooling device;
(f) introducing the cooled crude synthesis gas stream from step (c) or the cooled shifted synthesis gas stream from optional steps (d) and (e) into a carbon dioxide capture device, separating carbon dioxide from the cooled crude synthesis gas stream or from the cooled shifted synthesis gas stream under carbon dioxide separation conditions, discharging a carbon dioxide depleted synthesis gas stream and a carbon dioxide enriched offgas stream from the carbon dioxide capture device;
(g) introducing the carbon dioxide depleted synthesis gas stream into a hydrogen enrichment device, operating on the principle of pressure swing adsorption (PSA), discharging a hydrogen product stream and a PSA offgas stream from the hydrogen enrichment device, wherein the PSA offgas stream comprises hydrogen, carbon monoxide, carbon dioxide, and unreacted hydrocarbons;
(h) splitting the PSA offgas stream into a first partial PSA offgas stream and a second partial PSA offgas stream, wherein the first partial PSA offgas stream and the second partial PSA offgas stream both range between and including 0 to 100 mol-% of the PSA offgas stream, and the sum of the first partial PSA offgas stream and the second partial PSA offgas stream equals the PSA offgas stream; and
(i) introducing at least a portion of the first partial PSA offgas stream as the first fuel gas stream into the first fuel gas supply of the at least one burner or the plurality of burners in the reformer furnace, and introducing at least a portion of the second partial PSA offgas stream as the second fuel gas stream into the second fuel gas supply of the at least one burner or the plurality of burners in the reformer furnace.

The process for producing the hydrogen according to the present disclosure is of advantage in that the process ensures continuous production of low-carbon hydrogen even when the carbon dioxide capture device is not in operation. The process uses at least two fuel gas supplies on the same burner, namely the first fuel gas supply and the second fuel gas supply, to accommodate different streams of PSA tail gas or PSA offgas while minimizing NOx emissions and ensuring continuous production of hydrogen. When the process is carried out, switching between the first fuel gas supply and the second fuel gas supply is performed in an automatic way without impacting the production of hydrogen. Further, the process increases the overall reliability of a hydrogen production plant and increases a lifetime of the burner system.

Optionally, the carbon dioxide capture device is an amine wash unit. Optionally, the first fuel gas supply is a small burner header which is the only one used when the carbon dioxide capture device is in operation. The first fuel gas supply may be connected to staged burner tips while the second fuel gas supply connected to a primary burner tip.

Optionally, the carbon dioxide capture device can be bypassed completely or partially.

In one example, the first fuel gas supply is always in operation to its maximum extent, while the second fuel gas supply starts receiving flow when the carbon dioxide capture device is bypassed to a certain extent.

Optionally, the first fuel gas supply of the at least one burner or the plurality of burners is configured to permit operation with a fuel gas having a low flow rate, a low carbon dioxide concentration and a high lower heating value, and in that the second fuel gas supply of the at least one burner or the plurality of burners is configured to permit operation with a fuel gas having a high flow rate, a high carbon dioxide concentration and a low lower heating value.

Optionally, the first fuel gas supply of the at least one burner is configured to permit operation of the at least one burner or the plurality of burners with a fuel gas having a first Wobbe index (IW1), and in that the second fuel gas supply of the at least one burner is configured to permit operation of the at least one burner or the plurality of burners with a fuel gas having a second Wobbe index (IW2), and in that a ratio r between the two Wobbe indices (r = IW1/IW2) is larger than 1.8, preferably between 3 and 7, more preferably between 4.5 and 5.5.

Optionally, when the process is carried out with the carbon dioxide capture device in full-load operation, the entire first fuel gas stream is introduced into the first fuel gas supply, whereas only a part of the second fuel gas stream is introduced into the second fuel gas supply, corresponding to a fraction of less than 1 of its full flow or to zero. Accordingly, the overall reliability of the hydrogen plant and the lifetime of the burner is increased.

Optionally, when the process is carried out with the carbon dioxide capture device in partial-load operation or with the carbon dioxide capture device being shut down, the entire second fuel gas stream is introduced into the second fuel gas supply, whereas only a part of the first fuel gas stream is introduced into the first fuel gas supply, corresponding to a fraction of less than 1 of its full flow or to zero. Accordingly, the fuel throughput is increased while minimizing the burner tip pressure drop and enabling nominal heat release.

When the carbon dioxide capture device is upstream to the hydrogen enrichment device, both the first fuel gas supply and the second fuel gas supply may receive same PSA offgas stream composition. In such scenario, the process

may enable an automatic flow control system to divert a desired flow to each of the fuel gas supply.

Optionally, a flow diversion between the first fuel gas supply and the second fuel gas supply is controlled to allow as much as fuel to the first fuel gas supply as it is acceptable due to pressure drop limitations or opening or closing the connection to the second fuel gas supply via an automatic on or off valve in which case PSA offgas stream flow distribution determined by the restriction in the totality of burner tips of the first fuel gas supply versus second fuel gas supply.

Optionally, a third fuel gas containing hydrocarbons is additionally supplied to the at least one burner or the plurality of burners and combusted with oxygen and/or air. This allows for a better stability of the burner operation, for example during transient operations like plant startups or shut downs. At the same time, the energy input produced by the burners can be increased.

Optionally, the third fuel gas is supplied to the at least one burner or the plurality of burners via the first fuel gas supply and/or the second fuel gas supply and/or a third fuel gas supply, preferably arranged on the same at least one burner or the same plurality of burners. This allows for greater flexibility for introducing the third fuel gas. thus avoiding, or voluntarily producing, heat gradients in the reformer furnace.

Optionally, the first fuel gas supply is used as a common fuel gas supply for all fuel gases while the second fuel gas supply is used for operating with the fuel gas having a high flow rate, high carbon dioxide concentration and low lower heating value.

Optionally, the flue gas from the plant is recycled at least partially, for example recycled to the reformer furnace, thereby improving the operability of the plant and the burner system with flexible carbon dioxide capture scenarios.

According to a third aspect, the present disclosure provides a plant for producing hydrogen by steam reforming of a hydrocarbon-containing feed gas, comprising the following assemblies and components in fluid communication with each other:

(a) means for providing a feed gas stream containing gaseous or vaporized hydrocarbons, preferably natural gas or naphtha;

(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;

(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;

(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device;

(f) a hydrogen enrichment device, operating on the principle of pressure swing adsorption (PSA), means for introducing the cooled crude synthesis gas stream from step (c) or the cooled shifted synthesis gas stream from optional steps (d) and (e) into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;

(g) means for splitting the PSA offgas stream into a first partial PSA offgas stream and a second partial PSA offgas stream, means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream;

(h) a carbon dioxide capture device, designed to allow separating carbon dioxide from the first partial PSA offgas

stream under carbon dioxide separation conditions, means for introducing the first partial PSA offgas stream into the carbon dioxide capture device, means for discharging a first carbon dioxide depleted partial PSA offgas stream and a carbon dioxide enriched offgas stream from the carbon dioxide capture device; and

(i) means for introducing at least a portion of the first carbon dioxide depleted partial PSA offgas stream as the first fuel gas stream into the first fuel gas supply of the at least one burner or the plurality of burners in the reformer furnace, and means for introducing at least a portion of the second partial PSA offgas stream as the second fuel gas stream into the second fuel gas supply of the at least one burner or the plurality of burners in the reformer furnace.

According to a fourth aspect, the present disclosure provides a plant for producing hydrogen by steam reforming of a hydrocarbon-containing feed gas, comprising the following assemblies and components in fluid communication with each other:

(a) means for providing a feed gas stream containing gaseous or vaporized hydrocarbons, preferably natural gas or naphtha;

(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;

(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;

(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device;

(f) a carbon dioxide capture device, designed to allow separating carbon dioxide from the cooled shifted synthesis gas stream under carbon dioxide separation conditions, means for introducing the cooled crude synthesis gas stream from step (c) or the cooled shifted synthesis gas stream from optional steps (d) and (e) into the carbon dioxide capture device, means for discharging a carbon dioxide depleted synthesis gas stream and a carbon dioxide offgas stream from the carbon dioxide capture device;

(g) a hydrogen enrichment device, operating on the principle of pressure swing adsorption (PSA), means for introducing the carbon dioxide depleted synthesis gas stream into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;

(h) means for splitting the PSA offgas stream into a first partial PSA offgas stream and a second partial PSA offgas stream, means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream; and

(i) means for introducing at least a portion of the first partial PSA offgas stream as the first fuel gas stream into the first fuel gas supply of the at least one burner or the plurality of burners in the reformer furnace, and means for introducing at least a portion of the second partial PSA offgas stream as the second fuel gas stream into the second fuel gas supply of the at least one burner or the plurality of burners in the reformer furnace.

The plant for producing the hydrogen according to the present disclosure is of advantage in that the plant ensures continuous production of low-carbon hydrogen even when the carbon dioxide capture device is not in operation. The plant uses at least two fuel gas supplies on the same burner, namely the first fuel gas supply and the second fuel

gas supply, to accommodate different streams of PSA tail gas or PSA offgas which are due to different operation modes of the carbon dioxide capture device such as in full-load operation, partial-load operation and with the carbon dioxide capture device being shut down. Accordingly, the plant ensures continuous production of hydrogen, minimizes NOx emissions and increases a lifetime of the burner system. When the plant is in operation, switching between the first fuel gas supply and the second fuel gas supply is performed via an automatic flow control system without impacting the production of hydrogen.

Optionally, the carbon dioxide capture device is an amine wash unit.

Optionally, the first fuel gas supply is a small burner header which is the only one used when the carbon dioxide capture device is in operation. The first fuel gas supply may be connected to staged burner tips while the second fuel gas supply is connected to a primary burner tip.

Optionally, the carbon dioxide capture device is fluidly connected to a bypass line that allows bypassing the carbon dioxide capture device completely or partially.

The first fuel gas supply is always in operation to its maximum extent, while the second fuel gas supply starts receiving flow when the carbon dioxide capture device is bypassed to certain extent.

Optionally, the first fuel gas supply of the at least one burner or the plurality of burners is configured to permit operation of the burner or burners with a fuel gas having a low flow rate, a low carbon dioxide concentration and a high lower heating value, and in that the second fuel gas supply of the at least one burner or the plurality of burners is configured to permit operation of the burner or burners with a fuel gas having a high flow rate, a high carbon dioxide concentration and a low lower heating value.

Optionally, the first fuel gas supply of the at least one burner or the plurality of burners is configured to permit operation of the burner or burners with a fuel gas having a first Wobbe index (IW1), and in that the second fuel gas supply of the at least one burner or the plurality of burners is configured to permit operation of the burner or burners with a fuel gas having a second Wobbe index (IW2), and in that means are comprised to allow that a ratio r between the two Wobbe indices (r = IW1/IW2) is set at larger than 1.8, preferably between 3 and 7, more preferably between 4.5 and 5.5.

Optionally, means are comprised which enable a third fuel gas containing hydrocarbons to be additionally supplied to the at least one burner or the plurality of burners and to be combusted with oxygen and/or air.

Optionally, means are comprised which enable the third fuel gas to be supplied to the at least one burner via the first fuel gas supply or the second fuel gas supply or a third fuel gas supply, preferably arranged on the same at least one burner or the same plurality of burners.

According to a fifth aspect, the present disclosure provides a method for revamping of a hydrogen production plant, wherein the hydrogen production plant comprises the following assemblies and components in fluid communication with each other:

(a) means for providing a feed gas stream containing gaseous or vaporized hydrocarbons, preferably natural gas or naphtha;

(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;

(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;

(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device; and

(f) a hydrogen enrichment device, operating on the principle of pressure swing adsorption (PSA), means for introducing the cooled crude synthesis gas stream from step (c) or the cooled shifted synthesis gas stream from optional steps (d) and (e) into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;

said method for revamping comprising the steps of:

(g) installing means for splitting the PSA offgas stream into a first partial PSA offgas stream and a second partial PSA offgas stream, installing means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream;
(h) installing a carbon dioxide capture device, designed to allow separating carbon dioxide from the first partial PSA offgas stream under carbon dioxide separation conditions, installing means for introducing the first partial PSA offgas stream into the carbon dioxide capture device, installing means for discharging a first carbon dioxide depleted partial PSA offgas stream and a carbon dioxide enriched offgas stream from the carbon dioxide capture device; and
(i) installing means for introducing at least a portion of the first carbon dioxide depleted partial PSA offgas stream as the first fuel gas stream into the first fuel gas supply of the at least one burner or the plurality of burners in the reformer furnace, and installing means for introducing at least a portion of the second partial PSA offgas stream as the second fuel gas stream into the second fuel gas supply of the at least one burner or the plurality of burners in the reformer furnace.

According to a sixth aspect, the present disclosure provides a method for revamping of a hydrogen production plant, wherein the hydrogen production plant comprises the following assemblies and components in fluid communication with each other:

(a) means for providing a feed gas stream containing gaseous or vaporized hydrocarbons, preferably natural gas or naphtha;
(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace, the interior of which is heated by means of at least one burner, preferably by a plurality of burners, by combusting at least two different fuel gases with oxygen and/or air, said at least one burner or plurality of burners comprising a first fuel gas supply and a second fuel gas supply on the same burner, means for introducing a first fuel gas stream into the first fuel gas supply and means for introducing a second fuel gas stream into the second fuel gas supply, means for adjusting the flow rates of the first fuel gas stream and the second fuel gas stream;

means for introducing the feed gas stream into the reforming stage;
means for discharging a crude synthesis gas stream from the reforming stage;

(c) a first cooling device, designed to allow cooling the crude synthesis gas stream in the first cooling device in indirect heat exchange with at least one coolant stream, means for introducing the crude synthesis gas stream into the first cooling device, means for discharging a cooled crude synthesis gas stream from the first cooling device;
(d) optionally, a CO shift plant comprising at least one CO shift stage, means for introducing at least a part of the cooled crude synthesis gas stream into the CO shift plant, means for discharging from the CO shift plant a shifted synthesis gas stream enriched in hydrogen and carbon dioxide and depleted in carbon monoxide relative to the crude synthesis gas stream;
(e) optionally, a second cooling device, designed to allow cooling the shifted synthesis gas stream in the second cooling device in indirect heat exchange with at least one coolant stream, means for introducing the shifted synthesis gas stream into the second cooling device, means for discharging a cooled shifted synthesis gas stream from the second cooling device; and
(f) a hydrogen enrichment device, operating on the principle of pressure swing adsorption (PSA), means for introducing the carbon dioxide depleted synthesis gas stream into the hydrogen enrichment device, means for discharging a hydrogen product stream and a PSA offgas stream from the hydrogen enrichment device, wherein the PSA offgas stream comprises hydrogen, carbon monoxide, carbon dioxide, and unreacted hydrocarbons;

said method for revamping comprising the steps of:

(g) installing a carbon dioxide capture device, designed to allow separating carbon dioxide from the cooled shifted synthesis gas stream under carbon dioxide separation conditions, installing means for introducing the cooled crude synthesis gas stream from step (c) or the cooled shifted synthesis gas stream from optional steps (d) and (e) into the carbon dioxide capture device, installing means for discharging a carbon dioxide depleted synthesis gas stream and a carbon dioxide offgas stream from the carbon dioxide capture device;

(h) installing means for splitting the PSA offgas stream into a first partial PSA offgas stream and a second partial PSA offgas stream, installing means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream; and

(i) installing means for introducing at least a portion of the first partial PSA offgas stream as the first fuel gas stream into the first fuel gas supply of the at least one burner or the plurality of burners in the reformer furnace, and installing means for introducing at least a portion of the second partial PSA offgas stream as the second fuel gas stream into the second fuel gas supply of the at least one burner or the plurality of burners in the reformer furnace.

The method for revamping of the hydrogen production plant according to the present disclosure is of advantage in that the method enables to produce low-carbon hydrogen continuously in an existing hydrogen production plant even when the carbon dioxide capture device is not in operation.

Below table 1 illustrates two operating scenarios of the carbon dioxide capture device such as in full-operation and shut down, for production of hydrogen.

Embodiments of the present disclosure substantially eliminate or at least partially address the aforementioned technical drawbacks in existing technologies for hydrogen production by using the burner system with at least two fuel gas supply to accommodate different streams of PSA offgas, thereby enabling continuous production of low-carbon hydrogen even when the carbon dioxide capture device is not in operation and also minimizing NOx emissions.

**Table 1:** Two operating scenarios of the carbon dioxide capture device for production of hydrogen

| **Parameters** | **Units** | **Case 1** | **Case 2** |
|---|---|---|---|
| Carbon dioxide capture device running | - | Yes | No |
| Hydrogen production | % | 100 | 100 |
| PSA offgas stream flow rate | mol/mol | 100 | 650 |
| Carbon dioxide content in PSA offgas stream | %mol | 6 | 55 |
| Fraction of PSA offgas stream to first fuel gas supply | % | 100 | 5-10 |
| Fraction of PSA offgas stream to second fuel gas supply | % | 0 | 90-95 |

**DETAILED DESCRIPTION OF THE DRAWINGS**

**FIG. 1** is a block diagram of a plant **100** for producing hydrogen by steam reforming of a hydrocarbon-containing feed gas where a carbon dioxide capture device **126** is arranged downstream to a hydrogen enrichment device **118** according to an embodiment of the present disclosure. The plant **100** comprises a feed gas providing means **102,** a reformer furnace **104** that comprises a plurality of reformer tubes filled with a solid particulate reforming catalyst, a first cooling device **112,** an optional carbon monoxide (CO) shift plant **114,** an optional second cooling device **116,** a hydrogen enrichment device **118,** a splitting means **124,** a range setting means (not shown in **FIG. 1)** and a carbon dioxide capture device **126.** The feed gas providing means **102** provides feed gas stream containing gaseous or vaporized hydrocarbons, preferably natural gas or naphtha. The feed gas stream is introduced to a reforming stage via introducing means. In the reforming stage, the feed gas stream is introduced by introducing means (not shown in **FIG. 1)** into the plurality of reformer tubes and reacted under steam reforming conditions in the plurality of reformer tubes to produce a crude synthesis gas stream containing hydrogen, carbon monoxide, carbon dioxide and unreacted hydrocarbons. The crude synthesis gas stream is discharged by discharging means from the reforming stage. The plurality of reformer tubes are arranged in the reformer furnace **104,** the interior of which is heated by means of at least one burner **106,** preferably by a plurality of burners, by combusting at least two different fuel gases with oxygen and/or air. The at least one burner **106** or plurality of burners comprises a first fuel gas supply **108** and a second fuel gas supply **110** on the same burner **106.** The burner **106** or plurality of burners further includes means for introducing a first fuel gas stream into the first fuel gas supply **108,** means for introducing a second fuel gas stream into the second fuel gas supply **110,** and means for adjusting the flow rates of the first fuel gas stream and the second fuel gas stream (not shown). The crude synthesis

gas stream is discharged from the reforming stage via discharging means. The crude synthesis gas stream is introduced by introducing means into the first cooling device **112.** The first cooling device **112** is designed to allow cooling the crude synthesis gas stream in the first cooling device **112** in indirect heat exchange with at least one coolant stream. Cooled crude synthesis gas stream is discharged by discharging means from the first cooling device **112.** At least a part of the cooled crude synthesis gas stream is introduced by introducing means into the CO shift plant **114.** The CO shift plant **114** is designed to shift carbon monoxide (CO) in the cooled crude synthesis gas stream into carbon dioxide and hydrogen as useful components. A shifted synthesis gas stream enriched in carbon dioxide and hydrogen and depleted in CO relative to the crude synthesis gas stream is discharged by discharging means from the CO shift plant **114.** The shifted synthesis gas stream is introduced by introducing means into the second cooling device **116.** The second cooling device **116** is designed to allow cooling the shifted synthesis gas stream in the second cooling device **116** in indirect heat exchange with at least one coolant stream. Cooled shifted synthesis gas stream is discharged by discharging means from the second cooling device **116.** The cooled crude synthesis gas stream from the first cooling device **112** and/or the cooled shifted synthesis gas stream from the optional CO shift plant **114** and second cooling device **116** is introduced by introducing means into the hydrogen enrichment device **118.** The hydrogen enrichment device **118** is operating on the principle of pressure swing adsorption (PSA) to recover and purify hydrogen. A hydrogen product stream is discharged by discharging means **120** from the hydrogen enrichment device **118.** A PSA offgas stream is discharged by discharging means **122** from the hydrogen enrichment device **118.** The PSA offgas stream comprises hydrogen, carbon monoxide, carbon dioxide, and unreacted hydrocarbons. The splitting means **124** is designed to split the PSA offgas stream into a first partial PSA offgas stream and a second partial PSA offgas stream. The range setting means is designed to set the range of both the first partial PSA offgas stream and the second partial PSA offgas stream between and including 0 to 100 mol-% of the PSA offgas stream, and set the sum of the first partial PSA offgas stream and the second partial PSA offgas stream to equal the PSA offgas stream. The first partial PSA offgas stream is introduced by introducing means into the carbon dioxide capture device **126.** The carbon dioxide capture device **126** is designed to allow separating carbon dioxide from the first partial PSA offgas stream under carbon dioxide separation conditions. A first carbon dioxide depleted partial PSA offgas stream is discharged by means **128** from the carbon dioxide capture device **126.** A carbon dioxide enriched offgas stream is discharged by means **130** from the carbon dioxide capture device **126.** At least a portion of the first carbon dioxide depleted partial PSA offgas stream as the first fuel gas stream is introduced by introducing means **132** into the first fuel gas supply **108** of the at least one burner **106** or the plurality of burners in the reformer furnace **104.** At least a portion of the second partial PSA offgas stream as the second fuel gas stream is introduced by introducing means **134** into the second fuel gas supply **110** of the at least one burner **106** or the plurality of burners in the reformer furnace **104.** The carbon dioxide capture device **126** is fluidly connected to bypass line **136** and **138** that allow bypassing the carbon dioxide capture device **126** completely or partially.

The first fuel gas supply **108** is configured to permit operation of the burner **106** or burners with a fuel gas having a low flow rate, a low carbon dioxide concentration and a high lower heating value. The second fuel gas supply **110** is configured to permit operation of the burner **106** or burners with a fuel gas having a high flow rate, a high carbon dioxide concentration and a low lower heating value. The first fuel gas supply **108** is configured to permit operation of the burner **106** or burners with a fuel gas having a first Wobbe index (IW1). The second fuel gas supply **110** is configured to permit operation of the burner **106** or burners with a fuel gas having a second Wobbe index (IW2), and in that means are comprised to allow that a ratio r between the two Wobbe indices (r = IW1/IW2) is set at larger than 1.8, preferably between 3 and 7, more preferably between 4.5 and 5.5. The burner **106** or plurality of burners further includes means to enable a third fuel gas containing hydrocarbons to be additionally supplied to the at least one burner **106** or the plurality of burners via the first fuel gas supply **108** or the second fuel gas supply **110** or a third fuel gas supply **140,** preferably arranged on the same at least one burner **106** or the same plurality of burners and to be combusted with oxygen and/or air.

**FIG. 2** is a block diagram of a plant **200** for producing hydrogen by steam reforming of a hydrocarbon-containing feed gas where a carbon dioxide capture device **218** is arranged upstream to a hydrogen enrichment device **224** according to an embodiment of the present disclosure. The plant **200** comprises a feed gas providing means **202,** a reformer furnace **204** that comprises a plurality of reformer tubes filled with a solid particulate reforming catalyst, a first cooling device **212,** an optional carbon monoxide (CO) shift plant **214,** an optional second cooling device **216,** a carbon dioxide capture device **218,** a hydrogen enrichment device **224,** a splitting means **230,** a range setting means (not shown in **FIG. 2).** The feed gas providing means **202** provides feed gas stream containing gaseous or vaporized hydrocarbons, preferably natural gas or naphtha. The feed gas stream is introduced to a reforming stage via introducing means. In the reforming stage, the feed gas stream is introduced by introducing means into the plurality of reformer tubes and reacted under steam reforming conditions in the plurality of reformer tubes to produce a crude synthesis gas stream containing hydrogen, carbon monoxide, carbon dioxide and unreacted hydrocarbons. The crude synthesis gas stream is discharged by discharging means from the reforming stage. The plurality of reformer tubes are arranged in the reformer furnace **204,** the interior of which is heated by means of at least one burner **206,** preferably by a plurality of burners, by combusting at least two different fuel gases with oxygen and/or air. The burner **206** or plurality of burners comprises a first fuel gas supply **208** and a second fuel gas supply **210** on the same burner **206.** The burner **206** or plurality of burners further

includes means for introducing a first fuel gas stream into the first fuel gas supply **208,** means for introducing a second fuel gas stream into the second fuel gas supply **210,** and means for adjusting the flow rates of the first fuel gas stream and the second fuel gas stream (not shown). The crude synthesis gas stream is discharged from the reforming stage via discharging means. The crude synthesis gas stream is introduced by introducing means into the first cooling device **212.** The first cooling device **212** is designed to allow cooling the crude synthesis gas stream in the first cooling device **212** in indirect heat exchange with at least one coolant stream. Cooled crude synthesis gas stream is discharged by discharging means from the first cooling device **212.** At least a part of the cooled crude synthesis gas stream is introduced by introducing means into the CO shift plant **214.** The CO shift plant **214** is designed to shift carbon monoxide (CO) in the cooled crude synthesis gas stream into carbon dioxide and hydrogen as useful components. A shifted synthesis gas stream enriched in carbon dioxide and hydrogen and depleted in CO relative to the crude synthesis gas stream is discharged by discharging means from the CO shift plant **214.** The shifted synthesis gas stream is introduced by introducing means into the second cooling device **216.** The second cooling device **216** is designed to allow cooling the shifted synthesis gas stream in the second cooling device **216** in indirect heat exchange with at least one coolant stream. Cooled shifted synthesis gas stream is discharged by discharging means from the second cooling device **216.** The cooled crude synthesis gas stream from the first cooling device **212** and/or the cooled shifted synthesis gas stream from the optional CO shift plant **214** and second cooling device **216** is introduced by introducing means into the carbon dioxide capture device **218.** The carbon dioxide capture device **218** is designed to allow separating carbon dioxide from the cooled shifted synthesis gas stream under carbon dioxide separation conditions. A carbon dioxide depleted synthesis gas stream is discharged by discharging means **220** from the carbon dioxide capture device **218.** A carbon dioxide offgas stream is discharged by discharging means **222** from the carbon dioxide capture device **218.** The carbon dioxide depleted synthesis gas stream is introduced by introducing means into the hydrogen enrichment device **224.** The hydrogen enrichment device **224** is operating on the principle of pressure swing adsorption (PSA) to recover and purify hydrogen. A hydrogen product stream is discharged by discharging means **226** from the hydrogen enrichment device **224.** A PSA offgas stream is discharged by discharging means **228** from the hydrogen enrichment device **224.** The PSA offgas stream comprises hydrogen, carbon monoxide, carbon dioxide, and unreacted hydrocarbons. The splitting means **230** is designed to split the PSA offgas stream into a first partial PSA offgas stream and a second partial PSA offgas stream. The range setting means is designed to set the range of both the first partial PSA offgas stream and the second partial PSA offgas stream between and including 0 to 100 mol-% of the PSA offgas stream, and set the sum of the first partial PSA offgas stream and the second partial PSA offgas stream to equal the PSA offgas stream. At least a portion of the first partial PSA offgas stream as the first fuel gas stream is introduced by introducing means **232** into the first fuel gas supply **208** of the at least one burner **206** or the plurality of burners in the reformer furnace **204.**

At least a portion of the second partial PSA offgas stream as the second fuel gas stream is introduced by introducing means **234** into the second fuel gas supply **210** of the at least one burner **206** or the plurality of burners in the reformer furnace **204.** The carbon dioxide capture device **218** is fluidly connected to bypass lines **236, 238, 240** that allow bypassing the carbon dioxide capture device **218** completely or partially.

The first fuel gas supply **208** is configured to permit operation of the burner **206** or burners with a fuel gas having a low flow rate, a low carbon dioxide concentration and a high lower heating value. The second fuel gas supply **210** is configured to permit operation of the burner **206** or burners with a fuel gas having a high flow rate, a high carbon dioxide concentration and a low lower heating value. The first fuel gas supply **208** is configured to permit operation of the burner **206** or burners with a fuel gas having a first Wobbe index (IW1). The second fuel gas supply **210** is configured to permit operation of the burner **206** or burners with a fuel gas having a second Wobbe index (IW2), and in that means are comprised to allow that a ratio r between the two Wobbe indices (r = IW1/IW2) is set at larger than 1.8, preferably between 3 and 7, more preferably between 4.5 and 5.5. The burner **206** or plurality of burners further includes means to enable a third fuel gas containing hydrocarbons to be additionally supplied to the at least one burner **206** or the plurality of burners via the first fuel gas supply **208** or the second fuel gas supply **210** or a third fuel gas supply **242,** preferably arranged on the same at least one burner **206** or the same plurality of burners and to be combusted with oxygen and/or air.

**LIST OF REFERENCE NUMERALS**

100, 200 - plant or hydrogen production plant
102, 202 - feedgas providing means
104, 204 - reformer furnace
106, 206 - burner
108, 208 - first fuel gas supply
110, 210 - second fuel gas supply
112, 212 - first cooling device

114, 214 - CO shift plant
116, 216 - second cooling device
118, 224 - hydrogen enrichment device
120, 226 - hydrogen discharging means
122, 228 - PSA offgas discharging means
124, 230 - splitting means
126, 218 - carbon dioxide capture device
128 - first carbon dioxide depleted partial PSA offgas stream discharging means
130 - carbon dioxide enriched offgas stream discharging means
132 - first carbon dioxide depleted partial PSA offgas stream introducing means
134, 234 - second partial PSA offgas stream introducing means
136, 138, 236, 238, 240 - bypass line
140, 242 - third fuel gas supply
220 - carbon dioxide depleted synthesis gas stream discharging means
222 - carbon dioxide offgas stream discharging means
232 - first partial PSA offgas stream introducing means

## Claims

**1.** Process for producing hydrogen by steam reforming of a hydrocarbon-containing feed gas, comprising the following steps:

(a) providing a feed gas stream containing gaseous or vaporized hydrocarbons, preferably natural gas or naphtha;
(b) introducing the feed gas stream into a reforming stage, reacting the feed gas stream in the reforming stage under steam reforming conditions in a plurality of reformer tubes filled with a solid particulate reforming catalyst to produce a crude synthesis gas stream containing hydrogen, carbon monoxide, carbon dioxide, and unreacted hydrocarbons, said reformer tubes being arranged in a reformer furnace (104, 204), the interior of which is heated by means of at least one burner (106, 206), preferably by a plurality of burners, by combusting at least two fuel gases with oxygen and/or air, said at least one burner (106, 206) or plurality of burners comprising a first fuel gas supply (108, 208) and a second fuel gas supply (110, 210) on the same burner (106, 206), wherein a first fuel gas is introduced into the first fuel gas supply (108, 208) and a second fuel gas is introduced into the second fuel gas supply (110, 210); wherein the flow rates of the first fuel gas stream and the second fuel gas stream are adjustable;
(c) discharging the crude synthesis gas stream from the reforming stage and introducing the crude synthesis gas stream into a first cooling device (112, 212), cooling the crude synthesis gas stream in the first cooling device (112, 212) in indirect heat exchange with at least one coolant stream, discharging a cooled crude synthesis gas stream from the first cooling device (112, 212);
(d) optionally, introducing at least a part of the cooled crude synthesis gas stream into a CO shift plant (114, 214) comprising at least one CO shift stage, converting the cooled crude synthesis gas stream introduced into the CO shift plant (114, 214) under CO shift conditions to a shifted synthesis gas stream, discharging the shifted synthesis gas stream enriched in hydrogen and carbon dioxide and depleted in carbon monoxide relative to the crude synthesis gas stream;
(e) optionally, introducing the shifted synthesis gas stream into a second cooling device (116, 216), cooling the shifted synthesis gas stream in the second cooling device (116, 216) in indirect heat exchange with a second coolant stream, discharging a cooled shifted synthesis gas stream from the second cooling device (116, 216);
(f) introducing the cooled crude synthesis gas stream from step (c) or the cooled shifted synthesis gas stream from optional steps (d) and (e) into a hydrogen enrichment device (118, 224), operating on the principle of pressure swing adsorption (PSA), discharging a hydrogen product stream and a PSA offgas stream from the hydrogen enrichment device (118, 224), wherein the PSA offgas stream comprises hydrogen, carbon monoxide, carbon dioxide, and unreacted hydrocarbons;
(g) splitting the PSA offgas stream into a first partial PSA offgas stream and a second partial PSA offgas stream, wherein the first partial PSA offgas stream and the second partial PSA offgas stream both range between and including 0 to 100 mol-% of the PSA offgas stream, and the sum of the first partial PSA offgas stream and the second partial PSA offgas stream equals the PSA offgas stream;
(h) introducing the first partial PSA offgas stream into a carbon dioxide capture device (126, 218), separating carbon dioxide from the first partial PSA offgas stream under carbon dioxide separation conditions, discharging

a first carbon dioxide depleted partial PSA offgas stream and a carbon dioxide enriched offgas stream from the carbon dioxide capture device (126, 218); and
(i) introducing at least a portion of the first carbon dioxide depleted partial PSA offgas stream as the first fuel gas stream into the first fuel gas supply (108, 208) of the at least one burner (106, 206) or the plurality of burners in the reformer furnace (104, 204), and introducing at least a portion of the second partial PSA offgas stream as the second fuel gas stream into the second fuel gas supply (110, 210) of the at least one burner (106, 206) or the plurality of burners in the reformer furnace (104, 204).

**2.** Process for producing hydrogen by steam reforming of a hydrocarbon-containing feed gas, comprising the following steps:

(a) providing a feed gas stream containing gaseous or vaporized hydrocarbons, preferably natural gas or naphtha;
(b) introducing the feed gas stream into a reforming stage, reacting the feed gas stream in the reforming stage under steam reforming conditions in a plurality of reformer tubes filled with a solid particulate reforming catalyst to produce a crude synthesis gas stream containing hydrogen, carbon monoxide, carbon dioxide, and unreacted hydrocarbons, said reformer tubes being arranged in a reformer furnace (104, 204), the interior of which is heated by means of at least one burner (106, 206), preferably by a plurality of burners, by combusting at least two fuel gases with oxygen and/or air, said at least one burner (106, 206) or plurality of burners comprising a first fuel gas supply (108, 208) and a second fuel gas supply (110, 210) on the same burner (106, 206), wherein a first fuel gas is introduced into the first fuel gas supply (108, 208) and a second fuel gas is introduced into the second fuel gas supply (110, 210); wherein the flow rates of the first fuel gas stream and the second fuel gas stream are adjustable;
(c) discharging the crude synthesis gas stream from the reforming stage and introducing the crude synthesis gas stream into a first cooling device (112, 212), cooling the crude synthesis gas stream in the first cooling device (112, 212) in indirect heat exchange with at least one coolant stream, discharging a cooled crude synthesis gas stream from the first cooling device (112, 212);
(d) optionally, introducing at least a part of the cooled crude synthesis gas stream into a CO shift plant (114, 214) comprising at least one CO shift stage, converting the cooled crude synthesis gas stream introduced into the CO shift plant (114, 214) under CO shift conditions to a shifted synthesis gas stream, discharging the shifted synthesis gas stream enriched in hydrogen and carbon dioxide and depleted in carbon monoxide relative to the crude synthesis gas stream;
(e) optionally, introducing the shifted synthesis gas stream into a second cooling device (116, 216), cooling the shifted synthesis gas stream in the second cooling device (116, 216) in indirect heat exchange with a second coolant stream, discharging a cooled shifted synthesis gas stream from the second cooling device (116, 216);
(f) introducing the cooled crude synthesis gas stream from step (c) or the cooled shifted synthesis gas stream from optional steps (d) and (e) into a carbon dioxide capture device (126, 218), separating carbon dioxide from the cooled crude synthesis gas stream or from the cooled shifted synthesis gas stream under carbon dioxide separation conditions, discharging a carbon dioxide depleted synthesis gas stream and a carbon dioxide enriched offgas stream from the carbon dioxide capture device (126, 218);
(g) introducing the carbon dioxide depleted synthesis gas stream into a hydrogen enrichment device (118, 224), operating on the principle of pressure swing adsorption (PSA), discharging a hydrogen product stream and a PSA offgas stream from the hydrogen enrichment device (118, 224), wherein the PSA offgas stream comprises hydrogen, carbon monoxide, carbon dioxide, and unreacted hydrocarbons;
(h) splitting the PSA offgas stream into a first partial PSA offgas stream and a second partial PSA offgas stream, wherein the first partial PSA offgas stream and the second partial PSA offgas stream both range between and including 0 to 100 mol-% of the PSA offgas stream, and the sum of the first partial PSA offgas stream and the second partial PSA offgas stream equals the PSA offgas stream; and
(i) introducing at least a portion of the first partial PSA offgas stream as the first fuel gas stream into the first fuel gas supply (108, 208) of the at least one burner (106, 206) or the plurality of burners in the reformer furnace (104, 204), and introducing at least a portion of the second partial PSA offgas stream as the second fuel gas stream into the second fuel gas supply (110, 210) of the at least one burner (106, 206) or the plurality of burners in the reformer furnace (104, 204).

**3.** Process according to claim 1 or 2, **characterized in that** the carbon dioxide capture device (126, 218) can be bypassed completely or partially.

**4.** Process according to any one of the preceding claims, **characterized in that** the first fuel gas supply (108, 208) of

the at least one burner (106, 206) or the plurality of burners is configured to permit operation with a fuel gas having a low flow rate, a low carbon dioxide concentration and a high lower heating value, and **in that**
the second fuel gas supply (110, 210) of the at least one burner (106, 206) or the plurality of burners is configured to permit operation with a fuel gas having a high flow rate, a high carbon dioxide concentration and a low lower heating value.

**5.** Process according to any one of the preceding claims, **characterized in that**

the first fuel gas supply (108, 208) of the at least one burner (106, 206) is configured to permit operation of the at least one burner or the plurality of burners with a fuel gas having a first Wobbe index (IW1),
and **in that**

the second fuel gas supply (110, 210) of the at least one burner (106, 206) is configured to permit operation of the at least one burner or the plurality of burners with a fuel gas having a second Wobbe index (IW2), and **in that**
a ratio r between the two Wobbe indices (r = IW1/IW2) is larger than 1.8, preferably between 3 and 7, more preferably between 4.5 and 5.5.

**6.** Process according to any one of claims 1 to 5, **characterized in that**, when the process is carried out with the carbon dioxide capture device (126, 218) in full-load operation, the entire first fuel gas stream is introduced into the first fuel gas supply (108, 208), whereas only a part of the second fuel gas stream is introduced into the second fuel gas supply (110, 210), corresponding to a fraction of less than 1 of its full flow or to zero.

**7.** Process according to any one of claims 1 to 5, **characterized in that**, when the process is carried out with the carbon dioxide capture device (126, 218) in partial-load operation or with the carbon dioxide capture device (126, 218) being shut down, the entire second fuel gas stream is introduced into the second fuel gas supply (110, 210), whereas only a part of the first fuel gas stream is introduced into the first fuel gas supply (108, 208), corresponding to a fraction of less than 1 of its full flow or to zero.

**8.** Process according to any one of the preceding claims, **characterized in that** a third fuel gas containing hydrocarbons is additionally supplied to the at least one burner (106, 206) or the plurality of burners and combusted with oxygen and/or air.

**9.** Process according to claim 8, **characterized in that** the third fuel gas is supplied to the at least one burner (106, 206) or the plurality of burners via the first fuel gas supply (108, 208) and/or the second fuel gas supply (110, 210) and/or a third fuel gas supply (140, 242), preferably arranged on the same at least one burner (106, 206) or the same plurality of burners.

**10.** Plant (100, 200) for producing hydrogen by steam reforming of a hydrocarbon-containing feed gas, comprising the following assemblies and components in fluid communication with each other:

(a) means (102, 202) for providing a feed gas stream containing gaseous or vaporized hydrocarbons, preferably natural gas or naphtha;
(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace (104, 204), the interior of which is heated by means of at least one burner (106, 206), preferably by a plurality of burners, by combusting at least two different fuel gases with oxygen and/or air, said at least one burner (106, 206) or plurality of burners comprising a first fuel gas supply (108, 208) and a second fuel gas supply (110, 210) on the same burner (106, 206), means for introducing a first fuel gas stream into the first fuel gas supply (108, 208) and means for introducing a second fuel gas stream into the second fuel gas supply (110, 210), means for adjusting the flow rates of the first fuel gas stream and the second fuel gas stream;

means for introducing the feed gas stream into the reforming stage;
means for discharging a crude synthesis gas stream from the reforming stage;

(c) a first cooling device (112, 212), designed to allow cooling the crude synthesis gas stream in the first cooling device (112, 212) in indirect heat exchange with at least one coolant stream, means for introducing the crude

synthesis gas stream into the first cooling device (112, 212), means for discharging a cooled crude synthesis gas stream from the first cooling device (112, 212);

(d) optionally, a CO shift plant (114, 214) comprising at least one CO shift stage, means for introducing at least a part of the cooled crude synthesis gas stream into the CO shift plant (114, 214), means for discharging from the CO shift plant (114, 214) a shifted synthesis gas stream enriched in hydrogen and carbon dioxide and depleted in carbon monoxide relative to the crude synthesis gas stream;

(e) optionally, a second cooling device (116, 216), designed to allow cooling the shifted synthesis gas stream in the second cooling device (116, 216) in indirect heat exchange with at least one coolant stream, means for introducing the shifted synthesis gas stream into the second cooling device (116, 216), means for discharging a cooled shifted synthesis gas stream from the second cooling device (116, 216);

(f) a hydrogen enrichment device (118, 224), operating on the principle of pressure swing adsorption (PSA), means for introducing the cooled crude synthesis gas stream from step (c) or the cooled shifted synthesis gas stream from optional steps (d) and (e) into the hydrogen enrichment device (118, 224), means (120, 122) for discharging a hydrogen product stream and a PSA offgas stream from the hydrogen enrichment device (118, 224), wherein the PSA offgas stream comprises hydrogen, carbon monoxide, carbon dioxide, and unreacted hydrocarbons;

(g) means (124, 230) for splitting the PSA offgas stream into a first partial PSA offgas stream and a second partial PSA offgas stream, means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream;

(h) a carbon dioxide capture device (126, 218), designed to allow separating carbon dioxide from the first partial PSA offgas stream under carbon dioxide separation conditions, means for introducing the first partial PSA offgas stream into the carbon dioxide capture device (126, 218), means (128, 130) for discharging a first carbon dioxide depleted partial PSA offgas stream and a carbon dioxide enriched offgas stream from the carbon dioxide capture device (126, 218); and

(i) means (132) for introducing at least a portion of the first carbon dioxide depleted partial PSA offgas stream as the first fuel gas stream into the first fuel gas supply (108, 208) of the at least one burner (106, 206) or the plurality of burners in the reformer furnace (104, 204), and means (134, 234) for introducing at least a portion of the second partial PSA offgas stream as the second fuel gas stream into the second fuel gas supply (110, 210) of the at least one burner (106, 206) or the plurality of burners in the reformer furnace (104, 204).

**11.** Plant (100, 200) for producing hydrogen by steam reforming of a hydrocarbon-containing feed gas, comprising the following assemblies and components in fluid communication with each other:

(a) means (102, 202) for providing a feed gas stream containing gaseous or vaporized hydrocarbons, preferably natural gas or naphtha;

(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace (104, 204), the interior of which is heated by means of at least one burner (106, 206), preferably by a plurality of burners, by combusting at least two different fuel gases with oxygen and/or air, said at least one burner (106, 206) or plurality of burners comprising a first fuel gas supply (108, 208) and a second fuel gas supply (110, 210) on the same burner (106, 206), means for introducing a first fuel gas stream into the first fuel gas supply (108, 208) and means for introducing a second fuel gas stream into the second fuel gas supply (110, 210), means for adjusting the flow rates of the first fuel gas stream and the second fuel gas stream;

means for introducing the feed gas stream into the reforming stage;
means for discharging a crude synthesis gas stream from the reforming stage;

(c) a first cooling device (112, 212), designed to allow cooling the crude synthesis gas stream in the first cooling device (112, 212) in indirect heat exchange with at least one coolant stream, means for introducing the crude synthesis gas stream into the first cooling device (112, 212), means for discharging a cooled crude synthesis gas stream from the first cooling device (112, 212);

(d) optionally, a CO shift plant (114, 214) comprising at least one CO shift stage, means for introducing at least a part of the cooled crude synthesis gas stream into the CO shift plant (114, 214), means for discharging from the CO shift plant (114, 214) a shifted synthesis gas stream enriched in hydrogen and carbon dioxide and depleted in carbon monoxide relative to the crude synthesis gas stream;

(e) optionally, a second cooling device (116, 216), designed to allow cooling the shifted synthesis gas stream in the second cooling device (116, 216) in indirect heat exchange with at least one coolant stream, means for introducing the shifted synthesis gas stream into the second cooling device (116, 216), means for discharging a cooled shifted synthesis gas stream from the second cooling device (116, 216);
(f) a carbon dioxide capture device (126, 218), designed to allow separating carbon dioxide from the cooled shifted synthesis gas stream under carbon dioxide separation conditions, means for introducing the cooled crude synthesis gas stream from step (c) or the cooled shifted synthesis gas stream from optional steps (d) and (e) into the carbon dioxide capture device (126, 218), means (220, 222) for discharging a carbon dioxide depleted synthesis gas stream and a carbon dioxide offgas stream from the carbon dioxide capture device (126, 218);
(g) a hydrogen enrichment device (118, 224), operating on the principle of pressure swing adsorption (PSA), means for introducing the carbon dioxide depleted synthesis gas stream into the hydrogen enrichment device (118, 224), means (226, 228) for discharging a hydrogen product stream and a PSA offgas stream from the hydrogen enrichment device (118, 224), wherein the PSA offgas stream comprises hydrogen, carbon monoxide, carbon dioxide, and unreacted hydrocarbons;
(h) means (124, 230) for splitting the PSA offgas stream into a first partial PSA offgas stream and a second partial PSA offgas stream, means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream; and
(i) means (232) for introducing at least a portion of the first partial PSA offgas stream as the first fuel gas stream into the first fuel gas supply (108, 208) of the at least one burner (106, 206) or the plurality of burners in the reformer furnace (104, 204), and means (134, 234) for introducing at least a portion of the second partial PSA offgas stream as the second fuel gas stream into the second fuel gas supply (110, 210) of the at least one burner (106, 206) or the plurality of burners in the reformer furnace (104, 204).

**12.** Plant (100, 200) according to claim 10 or 11, **characterized in that** the carbon dioxide capture device (126, 218) is fluidly connected to a bypass line (136, 138, 236, 238, 240) that allows bypassing the carbon dioxide capture device (126, 218) completely or partially.

**13.** Plant (100, 200) according to any one of claims 10 to 12, **characterized in that** the first fuel gas supply (108, 208) of the at least one burner (106, 206) or the plurality of burners is configured to permit operation of the burner (106, 206) or burners with a fuel gas having a low flow rate, a low carbon dioxide concentration and a high lower heating value, and **in that** the second fuel gas supply (110, 210) of the at least one burner (106, 206) or the plurality of burners is configured to permit operation of the burner (106, 206) or burners with a fuel gas having a high flow rate, a high carbon dioxide concentration and a low lower heating value.

**14.** Plant (100, 200) according to any one of claims 10 to 12, **characterized in that**

the first fuel gas supply (108, 208) of the at least one burner (106, 206) or the plurality of burners is configured to permit operation of the burner (106, 206) or burners with a fuel gas having a first Wobbe index (IW1), and **in that**

the second fuel gas supply (110, 210) of the at least one burner (106, 206) or the plurality of burners is configured to permit operation of the burner (106, 206) or burners with a fuel gas having a second Wobbe index (IW2), and **in that** means are comprised to allow that
a ratio r between the two Wobbe indices (r = IW1/IW2) is set at larger than 1.8, preferably between 3 and 7, more preferably between 4.5 and 5.5.

**15.** Plant (100, 200) according to any one of claims 10 to 14, **characterized in that** means are comprised which enable a third fuel gas containing hydrocarbons to be additionally supplied to the at least one burner (106, 206) or the plurality of burners and to be combusted with oxygen and/or air.

**16.** Plant (100, 200) according to claim 15, **characterized in that** means are comprised which enable the third fuel gas to be supplied to the at least one burner (106, 206) via the first fuel gas supply (108, 208) or the second fuel gas supply (110, 210) or a third fuel gas supply (140, 242), preferably arranged on the same at least one burner (106, 206) or the same plurality of burners.

**17.** A method for revamping of a hydrogen production plant (100, 200),

wherein the hydrogen production plant (100, 200) comprises the following assemblies and components in fluid communication with each other:

(a) means (102, 202) for providing a feed gas stream containing gaseous or vaporized hydrocarbons, preferably natural gas or naphtha;
(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace (104, 204), the interior of which is heated by means of at least one burner (106, 206), preferably by a plurality of burners, by combusting at least two different fuel gases with oxygen and/or air, said at least one burner (106, 206) or plurality of burners comprising a first fuel gas supply (108, 208) and a second fuel gas supply (110, 210) on the same burner (106, 206), means for introducing a first fuel gas stream into the first fuel gas supply (108, 208) and means for introducing a second fuel gas stream into the second fuel gas supply (110, 210), means for adjusting the flow rates of the first fuel gas stream and the second fuel gas stream;

means for introducing the feed gas stream into the reforming stage;
means for discharging a crude synthesis gas stream from the reforming stage;

(c) a first cooling device (112, 212), designed to allow cooling the crude synthesis gas stream in the first cooling device (112, 212) in indirect heat exchange with at least one coolant stream, means for introducing the crude synthesis gas stream into the first cooling device (112, 212), means for discharging a cooled crude synthesis gas stream from the first cooling device (112, 212);
(d) optionally, a CO shift plant (114, 214) comprising at least one CO shift stage, means for introducing at least a part of the cooled crude synthesis gas stream into the CO shift plant (114, 214), means for discharging from the CO shift plant (114, 214) a shifted synthesis gas stream enriched in hydrogen and carbon dioxide and depleted in carbon monoxide relative to the crude synthesis gas stream;
(e) optionally, a second cooling device (116, 216), designed to allow cooling the shifted synthesis gas stream in the second cooling device (116, 216) in indirect heat exchange with at least one coolant stream, means for introducing the shifted synthesis gas stream into the second cooling device (116, 216), means for discharging a cooled shifted synthesis gas stream from the second cooling device (116, 216); and
(f) a hydrogen enrichment device (118, 224), operating on the principle of pressure swing adsorption (PSA), means for introducing the cooled crude synthesis gas stream from step (c) or the cooled shifted synthesis gas stream from optional steps (d) and (e) into the hydrogen enrichment device (118, 224), means (120, 122) for discharging a hydrogen product stream and a PSA offgas stream from the hydrogen enrichment device (118, 224), wherein the PSA offgas stream comprises hydrogen, carbon monoxide, carbon dioxide, and unreacted hydrocarbons;

said method for revamping comprising the steps of:

(g) installing means (124, 230) for splitting the PSA offgas stream into a first partial PSA offgas stream and a second partial PSA offgas stream, installing means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream;
(h) installing a carbon dioxide capture device (126, 218), designed to allow separating carbon dioxide from the first partial PSA offgas stream under carbon dioxide separation conditions, installing means for introducing the first partial PSA offgas stream into the carbon dioxide capture device (126, 218), installing means for discharging a first carbon dioxide depleted partial PSA offgas stream and a carbon dioxide enriched offgas stream from the carbon dioxide capture device (126, 218); and
(i) installing means (132) for introducing at least a portion of the first carbon dioxide depleted partial PSA offgas stream as the first fuel gas stream into the first fuel gas supply (108, 208) of the at least one burner (106, 206) or the plurality of burners in the reformer furnace (104, 204), and installing means (134, 234) for introducing at least a portion of the second partial PSA offgas stream as the second fuel gas stream into the second fuel gas supply (110, 210) of the at least one burner (106, 206) or the plurality of burners in the reformer furnace (104, 204).

**18.** A method for revamping of a hydrogen production plant (100, 200),

wherein the hydrogen production plant (100, 200) comprises the following assemblies and components in fluid communication with each other:

(a) means (102, 202) for providing a feed gas stream containing gaseous or vaporized hydrocarbons, preferably natural gas or naphtha;
(b) a reforming stage, comprising a plurality of reformer tubes filled with a solid particulate reforming catalyst to produce a crude synthesis gas stream containing hydrogen, carbon monoxide, carbon dioxide and unreacted hydrocarbons, said reformer tubes being arranged in a reformer furnace (104, 204), the interior of which is heated by means of at least one burner (106, 206), preferably by a plurality of burners, by combusting at least two different fuel gases with oxygen and/or air, said at least one burner (106, 206) or plurality of burners comprising a first fuel gas supply (108, 208) and a second fuel gas supply (110, 210) on the same burner (106, 206), means for introducing a first fuel gas stream into the first fuel gas supply (108, 208) and means for introducing a second fuel gas stream into the second fuel gas supply (110, 210), means for adjusting the flow rates of the first fuel gas stream and the second fuel gas stream;

means for introducing the feed gas stream into the reforming stage;
means for discharging a crude synthesis gas stream from the reforming stage;

(c) a first cooling device (112, 212), designed to allow cooling the crude synthesis gas stream in the first cooling device (112, 212) in indirect heat exchange with at least one coolant stream, means for introducing the crude synthesis gas stream into the first cooling device (112, 212), means for discharging a cooled crude synthesis gas stream from the first cooling device (112, 212);
(d) optionally, a CO shift plant (114, 214) comprising at least one CO shift stage, means for introducing at least a part of the cooled crude synthesis gas stream into the CO shift plant (114, 214), means for discharging from the CO shift plant (114, 214) a shifted synthesis gas stream enriched in hydrogen and carbon dioxide and depleted in carbon monoxide relative to the crude synthesis gas stream;
(e) optionally, a second cooling device (116, 216), designed to allow cooling the shifted synthesis gas stream in the second cooling device (116, 216) in indirect heat exchange with at least one coolant stream, means for introducing the shifted synthesis gas stream into the second cooling device (116, 216), means for discharging a cooled shifted synthesis gas stream from the second cooling device (116, 216); and
(f) a hydrogen enrichment device (118, 224), operating on the principle of pressure swing adsorption (PSA), means for introducing the carbon dioxide depleted synthesis gas stream into the hydrogen enrichment device (118, 224), means (226, 228) for discharging a hydrogen product stream and a PSA offgas stream from the hydrogen enrichment device (118, 224), wherein the PSA offgas stream comprises hydrogen, carbon monoxide, carbon dioxide, and unreacted hydrocarbons;

said method for revamping comprising the steps of:

(g) installing a carbon dioxide capture device (126, 218), designed to allow separating carbon dioxide from the cooled shifted synthesis gas stream under carbon dioxide separation conditions, installing means for introducing the cooled crude synthesis gas stream from step (c) or the cooled shifted synthesis gas stream from optional steps (d) and (e) into the carbon dioxide capture device (126, 218), installing means (220, 222) for discharging a carbon dioxide depleted synthesis gas stream and a carbon dioxide offgas stream from the carbon dioxide capture device (126, 218);
(h) installing means (124, 230) for splitting the PSA offgas stream into a first partial PSA offgas stream and a second partial PSA offgas stream, installing means for setting the range of both the first partial PSA offgas stream and the second partial PSA offgas stream between and including 0 to 100 mol-% of the PSA offgas stream, and for setting the sum of the first partial PSA offgas stream and the second partial PSA offgas stream to equal the PSA offgas stream; and
(i) installing means (232) for introducing at least a portion of the first partial PSA offgas stream as the first fuel gas stream into the first fuel gas supply (108, 208) of the at least one burner (106, 206) or the plurality of burners in the reformer furnace (104, 204), and installing means (134, 234) for introducing at least a portion of the second partial PSA offgas stream as the second fuel gas stream into the second fuel gas supply (110, 210) of the at least one burner (106, 206) or the plurality of burners in the reformer furnace (104, 204).

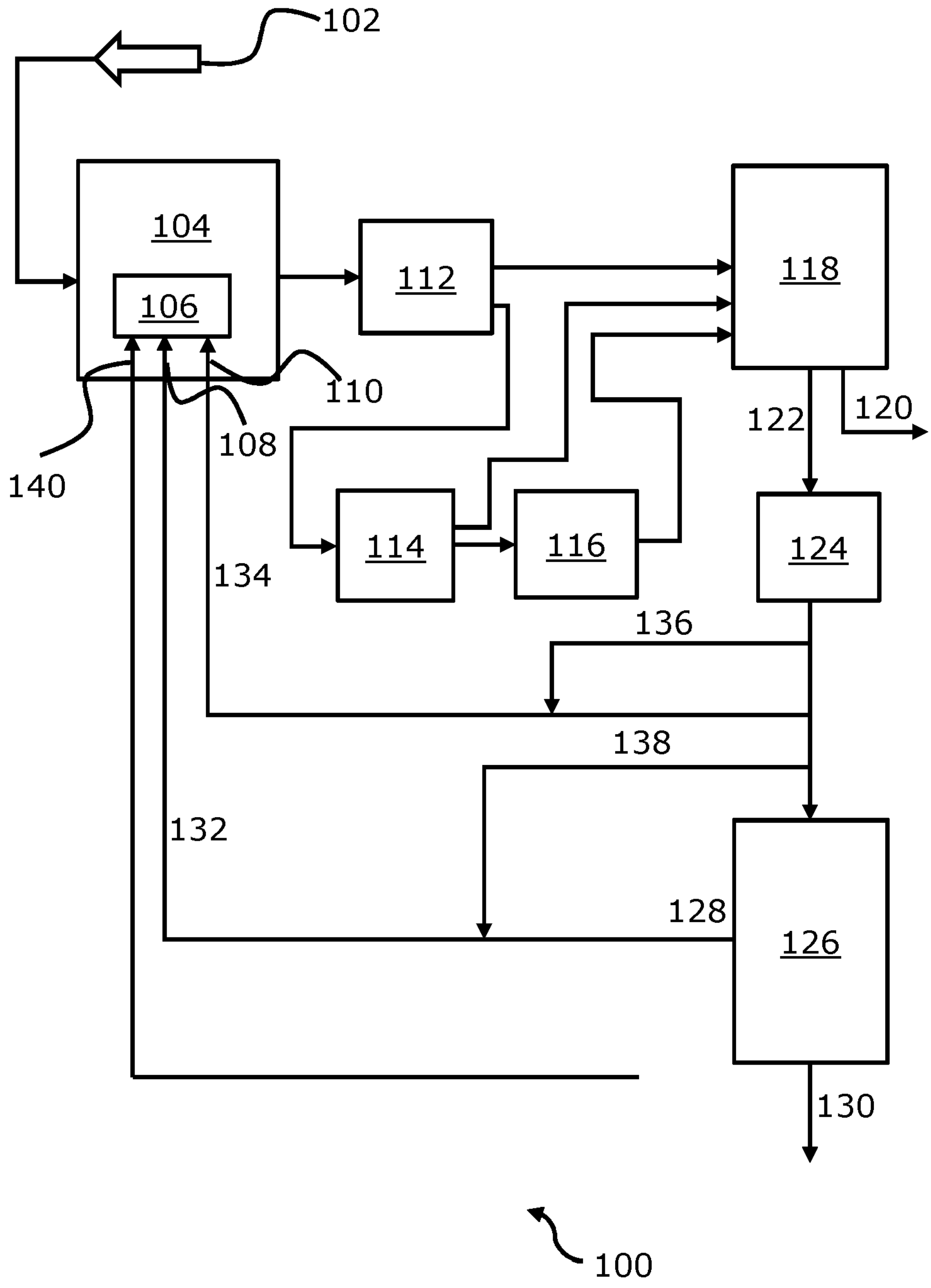
102
104
106
112
118
110
108
140
122
120
114
116
124
134
136
138
132
128
126
130
100

FIG. 1

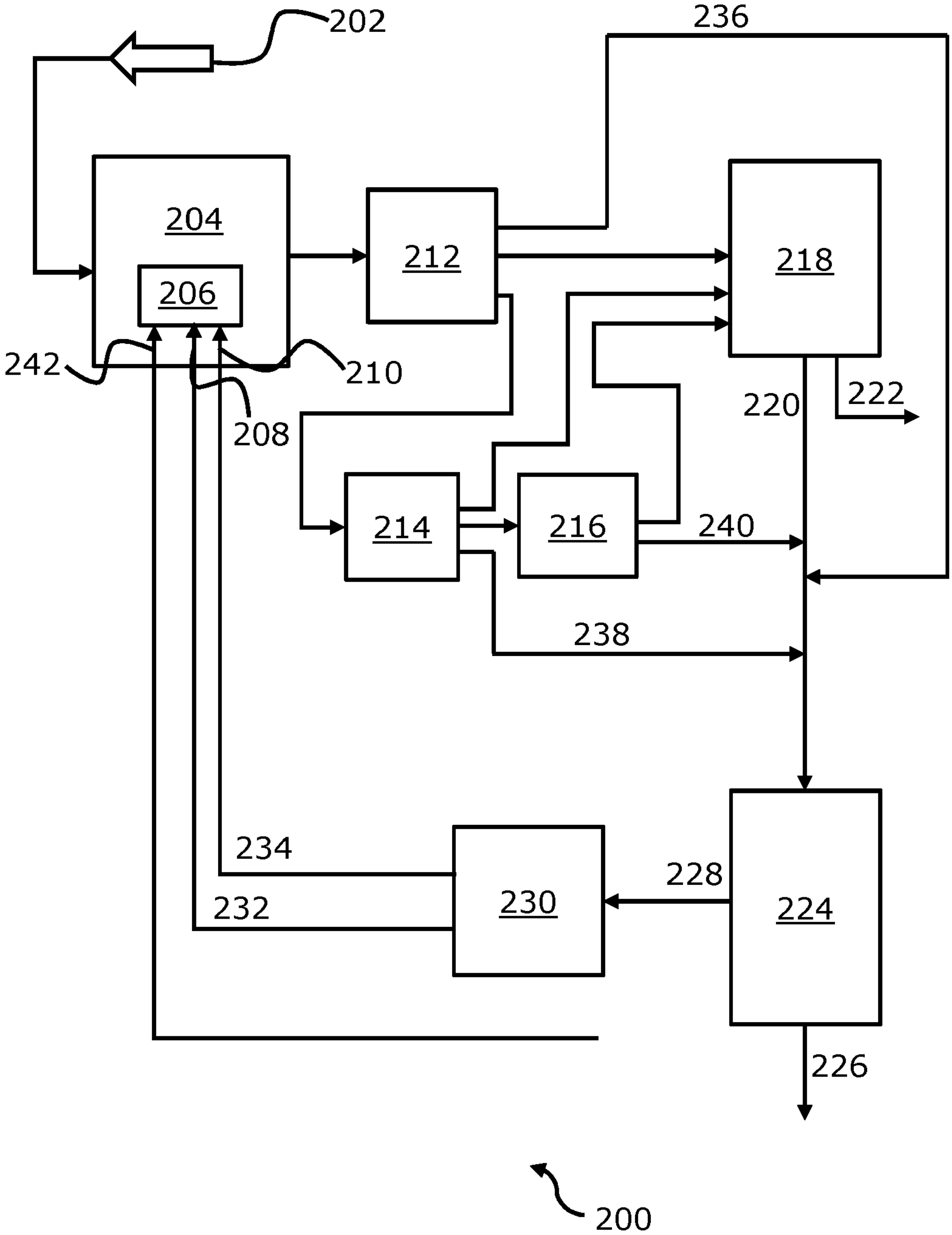
202
236
204
206
212
218
242
210
208
220
222
214
216
240
238
234
230
228
224
232
226
200

FIG. 2

Europäisches Patentamt
European Patent Office
Office européen des brevets

# EUROPEAN SEARCH REPORT

Application Number
EP 22 19 5516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2009/230359 A1 (GUVELIOGLU GALIP HAKAN [US] ET AL) 17 September 2009 (2009-09-17)<br>* paragraph [0145] - paragraph [0155]; figure 6 * | 2-9<br>1,10-18 | INV.<br>C01B3/38<br>C01B3/48 |
| X<br>A | US 2010/310949 A1 (LICHT WILLIAM ROBERT [US] ET AL) 9 December 2010 (2010-12-09)<br>* paragraph [0038] - paragraphs [0056], [0089]; figure 4; example 1 * | 2-9<br>1,10-18 | |
| X<br>A | US 2012/291481 A1 (TERRIEN PAUL [US] ET AL) 22 November 2012 (2012-11-22)<br>* paragraph [0067] - paragraph [0072]; figure 5 * | 1,3-9<br>10-18 | |
| A | WO 2013/131916 A1 (SHELL INT RESEARCH [NL]; SHELL OIL CO [US]) 12 September 2013 (2013-09-12)<br>* page 11, line 15 - page 13, line 10; figure 1 * | 1-18 | |

TECHNICAL FIELDS SEARCHED (IPC)

C01B

The present search report has been drawn up for all claims

1

| Place of search | Date of completion of the search | Examiner |
|---|---|---|
| Munich | 6 March 2023 | Cristescu, Ioana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 19 5516

This annex lists the patent family members relating to the patent documents cited in the above-mentioned European search report. The members are as contained in the European Patent Office EDP file on
The European Patent Office is in no way liable for these particulars which are merely given for the purpose of information.

06-03-2023

| Patent document cited in search report | Publication date | Patent family member(s) | Publication date |
|---|---|---|---|
| US 2009230359 A1 | 17-09-2009 | CA 2657669 A1 | 17-09-2009 |
| | | CN 101538014 A | 23-09-2009 |
| | | ES 2541806 T3 | 24-07-2015 |
| | | US 2009230359 A1 | 17-09-2009 |
| US 2010310949 A1 | 09-12-2010 | BR PI1001985 A2 | 05-07-2011 |
| | | CA 2705640 A1 | 03-12-2010 |
| | | CN 101905867 A | 08-12-2010 |
| | | EP 2266922 A1 | 29-12-2010 |
| | | ES 2525532 T3 | 26-12-2014 |
| | | PL 2266922 T3 | 30-06-2015 |
| | | US 2010310949 A1 | 09-12-2010 |
| US 2012291481 A1 | 22-11-2012 | CA 2777317 A1 | 18-11-2012 |
| | | CA 2777324 A1 | 18-11-2012 |
| | | CA 2777456 A1 | 18-11-2012 |
| | | US 2012291481 A1 | 22-11-2012 |
| | | US 2012291482 A1 | 22-11-2012 |
| | | US 2012291483 A1 | 22-11-2012 |
| | | WO 2012158669 A1 | 22-11-2012 |
| | | WO 2012158675 A1 | 22-11-2012 |
| | | WO 2012158679 A1 | 22-11-2012 |
| WO 2013131916 A1 | 12-09-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **J. YING et al.** The Activator Mechanism of Piperazine in Aqueous Methyldiethanolamine Solutions. *Energy Procedia,* 2017, vol. 114, 2078-2087